# EUROPÄISCHE PATENTSCHRIFT

(11) **EP 1 410 950 B1**
(45) Veröffentlichungstag und Bekanntmachung des Hinweises auf die Patenterteilung: **21.12.2011**
(21) Anmeldenummer: 03020406.9
(22) Anmeldetag: 10.09.2003
(51) Int. Cl.: B60Q 1/48, B60Q 11/00, G01S 7/52, G01S 15/93

(54) **System zur Überwachung des Nahbereichs eines Kraftfahrzeuges mit Störungserkennung und Verfahren zur Ermittlung der Störungsfreiheit eines derartigen Systems**
Vehicle proximity monitoring system with failure detection and method to determine the absence of defects in such a system
Système de surveillance de la proximité d'un véhicule avec détection de disfonctionnements et procédé pour déterminer l'abscence de disfonctionnements dans un tel système

(30) Priorität: 15.10.2002 DE 10247971
(43) Veröffentlichungstag der Anmeldung: 21.04.2004
(73) Patentinhaber: Valeo Schalter und Sensoren GmbH, 74321 Bietigheim-Bissingen (DE)
(72) Erfinder: Gotzig, Heinrich Dr., 74081 Heilbronn (DE); Jecker, Nicolas, 73728 Esslingen (DE); Lill, Anton, 74348 Lauffen (DE); Hoffsommer, Klaus, 74321 Bietgheim-Bissingen (DE)
(74) Vertreter: Pothmann, Karsten

(56) Entgegenhaltungen:
- DE-A1- 19 924 755
- GB-A- 2 283 819
- JP-A- 4 363 998
- US-A- 6 040 765

## Beschreibung

Die Erfindung betrifft ein System zur Überwachung des Nahbereichs eines Kraftfahrzeuges mit einer Störungserkennung sowie ein Verfahren zur Ermittlung der Störungsfreiheit von Sensoren eines derartigen Überwachungssystems. Systeme zur Überwachung des Nahbereichs eines Kraftfahrzeuges weisen in der Regel eine Mehrzahl von Sensoren auf, welche an der Vorderseite, der Rückseite oder den seitlichen Seiten des Kraftfahrzeuges angeordnet sind. Derartige Systeme sind beispielsweise als so genannte Einparkhilfen bekannt, bei welchen über die Sensoren ein Abstand zu angrenzenden Fremdfahrzeugen und/oder Objekten erfasst werden kann und dem Fahrer des Fahrzeuges eine diesbezügliche Information zugeleitet wird. Insbesondere betrifft die Erfindung ein Nahbereich-Erkennungssystem für Fahrzeuge, bei welchem als Sensoren Ultraschallsensoren verwendet werden.

Bei derartigen Systemen zur Erkennung und Überwachung des Nahbereiches von Fahrzeugen besteht ein Problem dahingehend, dass die Empfindlichkeit oder die Funktion des Systems beeinträchtigt sein kann, wenn äußere Umwelteinflüsse einen oder mehrere Sensoren in seiner Funktion beeinträchtigen. Beispielsweise kann es vorkommen, dass sich an der Außenseite des Fahrzeuges im Bereich eines Sensors Schmutz ablagert, wie zum Beispiel Schmutz-Rückstände bei Fahren in unwegsamem Gelände, Blätter im Herbst oder dergleichen. Gleichermaßen kann im Winter ein Sensor durch Schnee oder Eis in seiner Funktion beeinträchtigt sein, und auch bei starken Regenfällen kann es vorkommen, dass ein Sensor durch das ihn überströmende Wasser nicht in der normalen Weise funktioniert.

Diese äußeren, umweltbezogenen Störeinflüsse können somit dazu führen, dass die Empfindlichkeit und/oder die Funktion eines oder mehrerer Sensoren eines derartigen Überwachungssystems verschlechtert werden.

Aus der US 6 040 765 A sind bereits ein System und ein zugehöriges Verfahren zur Störungserkennung bei einer Ultraschalleinparkhilfe bekannt. Dabei wird zur Störungserkennung das Piezoelement des Sensors während einer Anregungsperiode mit einem Puls beaufschlagt und während eine unmittelbar daran anschließenden Auswerteperiode die ein Schwingungssignal des Piezoelements ausgewertet. Bei Ausbleiben des Schwingungssignals wird von einer Störung des Systems ausgegangen.

Die DE 199 24 755 A1 betrifft ein System und Verfahren zur Störungserkennung bei einer Ultraschalleinparkhilfe mit mehreren an einem Außenverkleidungsteil angeordneten Sensoren, bei dem die Intensität eines Übersprechsignals von ersten zu einem zweiten Sensor ausgewertet wird.

Aus der JP 04 363998 A sind ein System und Verfahren zur Störungserkennung bei einem Ultraschallsensor bekannt, bei dem die Resonanzfrequenz des Sensors über eine zugehörige Auswerteeinheit ausgewertet wird.

Demgegenüber ist es die Aufgabe der vorliegenden Erfindung, ein System und ein Verfahren zur Überwachung des Nahbereichs eines Kraftfahrzeugs bereitzustellen, mit welchen äußere, umweltbezogene Störungseinflüsse erkannt werden können, sodass fehlerhafte Informationen des Systems an den Fahrer vermieden werden.

Diese Aufgabe wird durch ein Nahbereich-Überwachungssystem mit den Merkmalen gemäß Anspruch 1 sowie durch ein Verfahren mit den Schritten gemäß Anspruch 4 gelöst. Vorteilhafte Weiterbildungen und Ausgestaltungen der Erfindung sind Gegenstand der jeweiligen abhängigen Ansprüche.

Erfindungsgemäß weist das System zur Überwachung des Nahbereichs mindestens einen Sensor und ein Steuergerät auf, wobei der Sensor ein akustischer Sensor, insbesondere ein Ultraschallsensor ist, und mittels des Steuergeräts akustische Sensorwerte zur Detektion von Objekten auswertbar sind. Das System weist eine Störungserkennung in einer Weise auf, dass mittels des Steuergeräts mindestens ein akustischer Sensorwert auf eine Störungsfreiheit des Sensors auswertbar ist, indem der mindestens eine gemessene Sensorwert mit gespeicherten Werten einer Normalfunktion des Systems vergleichbar ist. Diese Störungsabfrage kann einmal vor dem eigentlichen Überwachungsvorgang oder periodisch wiederholt erfolgen. Hierdurch können ohne zusätzliche Einrichtungen alle Sensoren eines Systems auf ihre Störungsfreiheit analysiert werden, sodass eine unrichtige Messung oder Erfassung von Objekten im Nahbereich des Fahrzeuges vermieden wird. Durch die von dem Sensor selbst erfassten akustischen Sensorwerte erkennt das System im Vergleich mit Werten desselben Sensors bei einer Normalfunktion, ob etwaige Schmutzablagerungen oder dergleichen die Funktion des Sensors beeinträchtigen. Dementsprechend kann auf eine etwaige Störung frühzeitig reagiert werden und beispielsweise dem Fahrer ein Warnsignal zur Verfügung gestellt werden, solange einer oder mehrere Sensoren des Systems nicht einwandfrei funktionieren.

Gemäß der Erfindung sind mittels des Steuergeräts die Eigenfrequenz und die Ausschwingzeit des akustischen Sensors zur Störungsdetektion auswertbar bzw. analysierbar. Bei einer Eigenfrequenz und/oder bei einer Ausschwingzeit des Sensors, welche von den normalen, gespeicherten Werten des Sensors abweichen, kann so durch das Steuergerät im Sinne eines Vorprüfens der Funktionsfähigkeit festgestellt werden, ob eine Störung durch Umwelteinflüsse gegeben ist. Die Analyse der Eigenfrequenz und der Ausschwingzeit erlaubt zudem ein Erkennen unterschiedlicher Arten von Störungen, da ein Vergleich beider Werte in unterschiedlichen Konstellationen Rückschlüsse auf dieselben zulässt. Unterschiedliche Arten von Störungen weisen nämlich verschiedene Muster von Frequenz- und Ausschwingwerten auf. Zum Beispiel ist bei einer Störung durch Regenwasser die Ausschwingzeit eines Sensors relativ lang bei einer im Verhältnis zur Normalfunktion niedrigen Eigenfrequenz. Umgekehrt ist bei einer Eisschicht, die den Sensor abdeckt, die Eigenfrequenz des Sensors relativ hoch und die Ausschwingzeit dagegen relativ kurz. Diese Muster von störungsabhängigen Auswirkungen auf die beiden Werte einer Ausschwingzeit und einer Eigenfrequenz von insbesondere Ultraschallsensoren erlauben somit eindeutige Rückschlüsse über die Art der Störung und welche Maßnahmen zu ergreifen sind. Eine entsprechende Warninformation je nach Störungsart kann erzeugt werden.

Gemäß der Erfindung ist in dem Steuergerät ein Speicher vorgesehen, in welchem Normalwerte einer Eigenfrequenz und einer Ausschwingphase der Sensoren gespeichert sind zum Vergleichen mit den zur Störungsdetektion erfassten Messwerte der Sensoren. Die Erfindung kann so auf einfache Weise beispielsweise in Form eines Programm-Moduls in bestehende Systeme integriert werden. Der Speicher des Steuergerätes kann fahrzeugtyp- oder sensorabhängig mit Vergleichswerten versehen werden, die für die Störungsdetektion in dem System verwendet werden. Die Eigenfrequenz und die Ausschwingphase bzw. -zeit können als separate Werte in dem Steuergerät gespeichert sein oder es können Muster von kombinierten Relativwerten derselben gespeichert sein. Vorzugsweise ist in dem Speicher eine Mehrzahl von unterschiedlichen Störungswerten der Ausschwingzeit und der Eigenfrequenz gespeichert, sodass auch der Grad der Verschmutzung mittels des Systems erkennbar ist. Hieraus können unterschiedliche Warnhinweise abhängig von Störungsgrad erzeugt werden.

Nach einer weiteren vorteilhaften Ausgestaltung der Erfindung ist der Sensor Teil eines Einparkhilfe-Systems eines Personenkraftfahrzeugs. Die Verwendung von Ultraschallsensoren wird hierdurch in Einparkhilfe-Systemen zuverlässiger, und die Erzeugung von Falschinformationen bei Vorliegen von äußeren Störungen wird vermieden.

Nach einer weiteren vorteilhaften Ausgestaltung der Erfindung ist mittels des Steuergeräts die Empfindlichkeit des mindestens einen akustischen Sensors einstellbar. Hierdurch kann bei leichter Verschmutzung oder nur geringer Störung eines oder mehrerer Sensoren durch Verändern der Empfindlichkeit dieser Sensoren die Funktionsfähigkeit des Nahbereich-Überwachungssystems aufrecht erhalten werden, indem über das Steuergerät die Empfindlichkeit entsprechend erhöht wird.

Das erfindungsgemäße Verfahren zur Ermittlung der Störungsfreiheit von Sensoren eines Überwachungssystems des Nahbereichs eines Kraftfahrzeugs gemäß Anspruch 4 umfasst das Ermitteln von Sensorwerten über vorzugsweise Ultraschallsensoren, um die Entfernung und/oder das Vorhandensein von Objekten im Nahbereich zu ermitteln. Dabei wird über ein Steuergerät dem Fahrer eine Warnung bei Vorhandensein eines Objektes zur Verfügung gestellt und die Störungsfreiheit der Sensoren anhand der erfassten Sensorwerte durch Vergleichen von mindestens einem Sensorwert mit gespeicherten Werten eines störungsfreien Zustandes überprüft. Unter Ausnutzung der Tatsache, dass bei Ultraschallsensoren oder anderen akustischen Sensoren das Vorhandensein von zusätzlichen Schichten vor dem Sensor, wie zum Beispiel Eis, Schnee, Schmutz, Laub oder dergleichen, eine Veränderung in den erfassten Sensorwerten erzeugt, kann so auf konstruktiv einfache und somit kostengünstige Art eine effektive Störungsanalyse mit bestehenden Systemen für eine Überwachung des Nahbereichs eines Fahrzeuges realisiert werden. Die Überprüfung der Störungsfreiheit der Sensoren kann so vor dem eigentlichen Aktivieren oder beim Betrieb des Systems zur Überwachung des Nahbereiches erfolgen, sodass keine falschen oder verfälschten Ergebnisse mit dem System erzeugt werden. Hierdurch wird dem Fahrer keine fehlerhafte Information zur Verfügung gestellt. Störeinflüsse, welche bei akustischen Sensoren wie Ultraschallsensoren fast immer vorhanden sind, werden erfindungsgemäß nicht nur ausgeblendet oder weggefiltert, sondern können auch hinsichtlich ihrer Stärke und der Art der Störung ausgewertet und weiterverarbeitet werden. Der Fahrer kann somit entscheiden, ob er auf die Automatik des Überwachungssystems weiter vertraut oder aufgrund von erheblichen Störungseinflüssen besser seinem eigenen Urteilsvermögen vertraut. Mit dem erfindungsgemäßen Verfahren ist es möglich, dem Fahrer bei Vorhandensein von umweltbezogenen, äußeren Störeinflüssen an einem oder an einer Mehrzahl von Sensoren eine Warninformation zu erzeugen. Die Sicherheit und die Wirksamkeit des Systems sind somit erhöht.

Nach einer vorteilhaften Ausgestaltung des erfindungsgemäßen Verfahrens werden die Eigenfrequenz und/oder die Ausschwingzeit eines Ultraschallsensors über einen vorbestimmten Zeitraum verwendet zum Überprüfen der Störungsfreiheit des Systems. Vorzugsweise erfolgt dies vor dem eigentlichen Überwachungsvorgang. Überraschenderweise hat sich gezeigt, dass ein äußerer Störungszustand an einem Ultraschallsensor zu erheblichen Veränderungen in den gemessenen Werten mindestens des einen oder des anderen Faktors (Eigenfrequenz oder Ausschwingzeit) führt. Somit kann über die Analyse der Ausschwingzeit und der Eigenfrequenz eines Sensors nicht nur das Vorhandensein eines Störungszustandes festgestellt werden, sondern es können auch Aussagen über die Art der Störung und die Dauerhaftigkeit derselben aus der Relation beider Werte abgeleitet werden. Hierdurch ist es mit dem Verfahren gemäß der Erfindung möglich, qualitative Aussagen über die Störung des Systems bei vorübergehenden Störungen so lange bereitzustellen, bis ein Normalzustand wieder erreicht wird. Unter Normalzustand wird vorliegend ein Zustand verstanden, bei dem die akustischen Sensoren mit einer normalen Empfindlichkeit arbeiten können, das heißt, dass lediglich die ohnehin immer vorhandenen Störfrequenzen bzw. Störechos ausgeblendet werden, wie es dem Fachmann für derartige Systeme hinlänglich bekannt ist.

Gemäß einer vorteilhaften Ausgestaltung des erfindungsgemäßen Verfahrens wird die Störungsfreiheit der akustischen Sensoren des Überwachungssystems so lange periodisch wiederholt überprüft, bis ein störungsfreier Zustand erreicht ist. Die periodische Überprüfung kann hierbei in relativ kurzen Zeitabständen erfolgen, zum Beispiel im Bereich von einigen Sekunden. Hierdurch wird sichergestellt, dass, sobald die Störung beseitigt ist, zum Beispiel bei schmelzendem Eis auf dem Sensor, die normale Funktionalität des Einparkhilfe-Systems oder dergleichen wieder bereitgestellt wird.

Nach einer weiteren vorteilhaften Ausgestaltung des erfindungsgemäßen Verfahrens wird eine Warninformation für den Fahrer bei Detektieren einer Störung eines oder mehrerer Sensoren erzeugt. Der Fahrer kann somit beispielsweise eine akustische und/oder eine grafische Warnung erhalten, dass das Überwachungssystem des Nahbereichs seines Fahrzeuges nicht vollständig funktionsfähig ist. Bis zum Erreichen der Normalfunktion des Systems ist der Fahrer somit gewarnt, dass er sich nicht vollständig auf das System, welches beispielsweise eine Einparkhilfe sein kann, verlassen kann.

Nach einer weiteren vorteilhaften Ausgestaltung der Erfindung werden voreingestellte Grenzwerte der Ausschwingzeit und/oder der Eigenfrequenz der Sensoren des Systems zum Bestimmen einer Störung in der Erfassung von Fremdobjekten im Nahbereich verwendet. Bei nur geringer Störung eines Sensors wird so vermieden, dass schon eine Störung festgestellt wird. Ein Vergleich dieser beiden Werte ermöglicht eine genaue Festlegung der Art der Störung und erhöht somit die Sicherheit und Aussagefähigkeit des Überwachungssystems.

Nach einer weiteren vorteilhaften Ausgestaltung der Erfindung werden die Sensorwerte in einer Prüfphase mit gespeicherten Mustern von verschiedenen Störungsarten zur Erfassung der Art der Störung verglichen. Es hat sich überraschenderweise gezeigt, dass die Art der äußeren Umweltstörungen, die bei derartigen Sensoren auftreten können, in den Werten der Eigenfrequenz und der Ausschwingzeit des Sensors spezifische Muster aufweist. So kann beispielsweise unterschieden werden, ob sich bei der Störung eines Sensors lediglich die Menge von Wasser bei einem starken Regenguss bemerkbar macht oder ob es sich um eine starke Verschmutzung des Bereichs der Karosserie, in welchem der Sensor angeordnet ist, handelt. Die Muster einer Störungsart können vorteilhafterweise mit gewissen Toleranzen in dem System abgespeichert sein, sodass in Grenzbereichen keine Zwiespältigkeiten diesbezüglich auftreten. Die Wirksamkeit und die Informationsgenauigkeit des Überwachungssystems ist somit erhöht.

Weitere Vorteile und Merkmale der Erfindung sind der nachfolgenden Beschreibung zu entnehmen, in welcher die Erfindung anhand des in der beigefügten Zeichnung dargestellten Ausführungsbeispiels näher beschrieben und erläutert ist.

In der Zeichnung zeigen:
- Figur 1: ein Flussdiagramm eines Ausführungsbeispiels des Verfahrens gemäß der Erfindung; und
- Figur 2: Diagramme von Messwerten eines Sensors mit unterschiedlichen Störungsarten über die Zeit bei einem Nahbereich-Überwachungssystem mit Störungsdetektion gemäß der Erfindung.

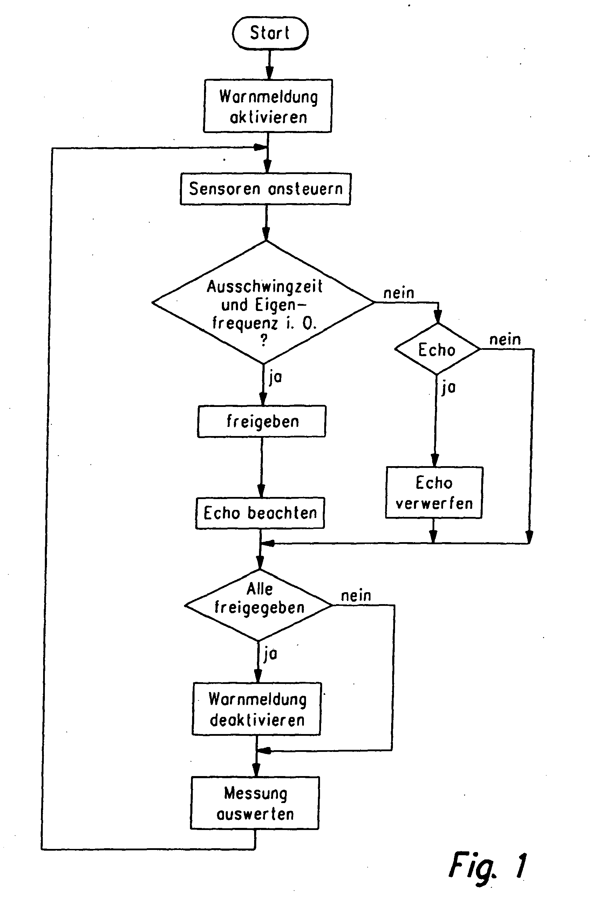

Ein Ausführungsbeispiel des erfindungsgemäßen Verfahrens ist in Form eines Flussdiagramms in Figur 1 wiedergegeben: Nach dem Start des Systems bzw. der Überwachungsfunktion des Kraftfahrzeuges wird zunächst eine Warnmeldung aktiviert, und es werden die Sensoren, welche vorzugsweise Ultraschallsensoren sind, durch das Steuergerät angesteuert. Die Sensoren erzeugen eine spezifische Eigenfrequenz und Ausschwingzeit, abhängig von der Art des Sensors und insbesondere der Membran des Ultraschallsensors. In einem Speicher des Systems sind normale Werte für die Eigenfrequenz und die Ausschwingzeit eines jeweiligen Sensors abgelegt, mittels welchen durch das Verfahren überprüft wird, ob die aktuell gemessenen Werte den Normalwerten entsprechen. Sofern dies der Fall ist, wird der überwachte Sensor freigegeben und mittels des Echos beispielsweise die Entfernung zu einem Objekt im Nahbereich, insbesondere einem angrenzend geparkten Fahrzeug, ermittelt. Sofern einer oder beide Werte der Ausschwingzeit und der Eigenfrequenz eines Sensors nicht den Normalwerten entsprechen, wird das Echo des Sensors weiter analysiert und nur bei ausreichendem Vorhandensein des Echos auf eine Normalfunktion des Systems übergegangen. Im Falle eines Nichtvorliegens eines ausreichenden Echos wird die Freigabe des Sensors weiter verzögert, und eine akustische oder grafische Warnmeldung bleibt aktiviert. Sofern alle Sensoren des Systems nach einer derartigen Überprüfung freigegeben worden sind, wird die Anfangs-Warnmeldung deaktiviert, und es werden Messungen und Auswertungen eines Normalbetriebs des Systems vorgenommen. Dieser Vorgang erfolgt einmalig am Beginn oder wiederholt sich fortlaufend während des Betriebs.

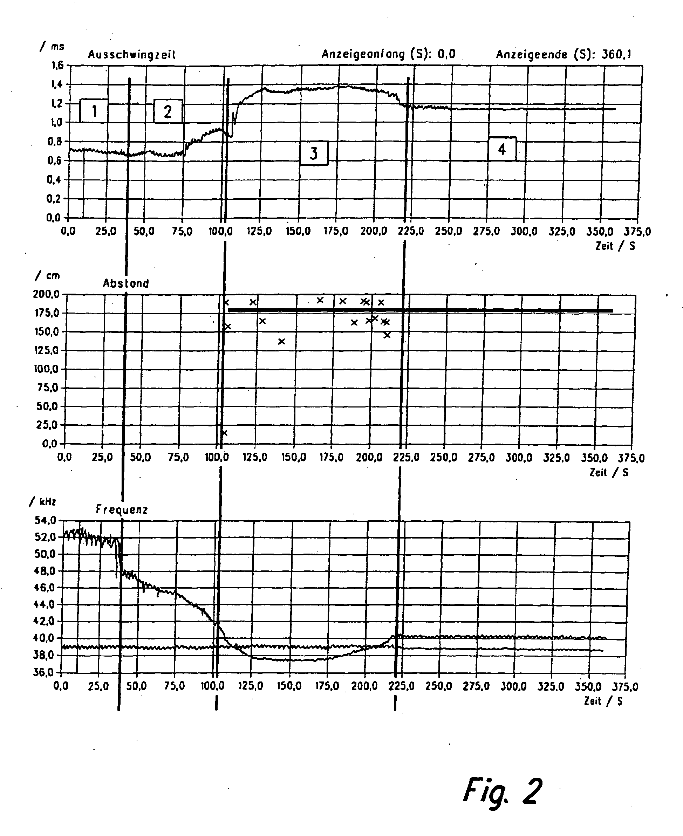

In Figur 2 sind beispielhaft drei Diagramme wiedergegeben, welche gemessene Werte mittels eines Ultraschallsensors eines Nahbereich-Überwachungssystems gemäß der Erfindung wiedergeben. In dem oberen Diagramm ist über die Zeit die Ausschwingzeit eines Ultraschallsensors wiedergegeben, in dem mittleren Diagramm ist der Abstand, welcher über das Echo des Ultraschallsensors ermittelt wird, wiedergegeben, und bei dem unteren Diagramm ist über die Zeit die jeweilige Eigenfrequenz eines Sensors bei einem erfindungsgemäßen System wiedergegeben. Die Bereiche der jeweiligen Diagramme sind mit den Nummern 1, 2, 3 und 4 bezeichnet, wobei jeweils unterschiedliche Zustände je Bereich dargestellt sind. Die unterschiedlichen Zustände lassen eine Auswertung der Sensorwerte dahingehend zu, dass analysierbar ist, ob und welche Art einer Störung an einem Ultraschallsensor des Systems gegeben ist. Der Zustand in dem mit 1 gekennzeichneten Bereich ist gekennzeichnet durch eine hohe Eigenfrequenz, eine relativ niedrige Ausschwingzeit des Sensors und eine unstabile Angabe hinsichtlich des Abstandes, das heißt eine ungenaue Entfernungsmessung mit dem Sensor. Dieser Zustand entspricht einer dicken Eisschicht auf dem Sensor bzw. der Membran des Ultraschallsensors von beispielsweise 2 mm. Eine dicke Eisschicht erniedrigt z.B. die Ausschwingzeit um bis zu 0,7 ms (-30%) und erhöht die Eigenfrequenz bis über 50 Kilohertz (+25%). Diese Eisschicht verhindert eine störungsfreie Funktion des Systems.

In dem mit der Ziffer 2 gekennzeichneten Bereich ist die Eisschicht, welche den Sensor abdeckt, dünner, und die Ausschwingzeit steigt an, wohingegen die Eigenfrequenz des Sensors abnimmt. Eine Abstandmessung ist mit dem Sensor in dieser Situation nicht erfolgreich.

In dem mit 3 gekennzeichneten Zustandsbereich ist der Sensor mit einer Wasserschicht abgedeckt. Hier ist die Eigenfrequenz des Sensors relativ niedrig und die Ausschwingzeit relativ lang. Auch hier ist die Entfernungsmessung bzw. die Erfassung eines Abstandes zu einem Objekt im Nahbereich des Fahrzeuges noch relativ ungenau aber schon besser.

In dem mit 4 gekennzeichneten Bereich hingegen ist die Membran frei von jedweder äußeren Störung, sodass eine normale Ausschwingzeit, eine normale Eigenfrequenz und eine stabile Entfernungsmessung (mittleres Diagramm) möglich ist. In dieser Situation wird das erfindungsgemäße System einen störungsfreien Zustand detektieren und zur normalen Funktionsweise des Überwachungssystems übergehen.

Sämtliche in der Beschreibung, den nachfolgenden Ansprüchen und der Zeichnung dargestellten Merkmale können sowohl einzeln als auch in beliebiger Kombination miteinander erfindungswesentlich sein.

## Patentansprüche

1. System zur Überwachung des Nahbereichs eines Kraftfahrzeuges mit Störungserkennung mit mindestens einem Sensor und einem Steuergerät, wobei der Sensor ein akustischer Sensor, insbesondere ein Ultraschallsensor, ist und mittels des Steuergeräts akustische Sensorwerte zur Detektion von Objekten auswertbar sind, wobei mittels des Steuergeräts mindestens ein akustischer Sensorwert auf Störungsfreiheit des Sensors hin auswertbar ist, und wobei der mindestens eine gemessene Sensorwert mit gespeicherten Werten einer Normalfunktion des Sensors vergleichbar ist, **dadurch gekennzeichnet, dass** die Eigenfrequenz und die Ausschwingzeit des akustischen Sensors zur Störungsdetektion mittels des Steuergeräts auswertbar sind und dass in dem Steuergerät ein Speicher vorgesehen ist und Normalwerte der Eigenfrequenz und der Ausschwingzeit des Sensors in dem Speicher gespeichert sind zum Vergleichen mit den zur Störungsdetektion erfassten Werten.

2. System nach einem der vorhergehenden Ansprüche, **dadurch gekennzeichnet, dass** der mindestens eine Sensor Teil eines Einparkhilfe-Systems eines Personenkraftwagens ist.

3. System nach einem der vorhergehenden Ansprüche, **dadurch gekennzeichnet, dass** mittels des Steuergeräts die Empfindlichkeit des mindestens einen akustischen Sensors einstellbar ist.

4. Verfahren zur Ermittlung der Störungsfreiheit von Sensoren eines Überwachungssystems des Nahbereichs eines Kraftfahrzeugs, wobei mittels einer Mehrzahl von Sensoren, insbesondere von Ultraschallsensoren, über gemessene Sensorwerte das Vorhandensein und/oder die Entfernung von Objekten im Nahbereich ermittelt wird und über ein Steuergerät zum Erzeugen einer Warninformation für den Fahrer verarbeitet wird mit einem Prüfen der Störungsfreiheit der Sensoren anhand erfasster Sensorwerte durch Vergleichen von mindestens einem der Sensorwerte mit gespeicherten Werten eines störungsfreien Zustands, **dadurch gekennzeichnet, dass** die Eigenfrequenz und die Ausschwingzeit des akustischen Sensors zur Störungsdetektion mittels des Steuergeräts ausgewertet werden und dass die zur Störungsdetektion erfassten Werte mit Normalwerten der Eigenfrequenz und der Ausschwingzeit des Sensors verglichen werden, die einem im Steuergerät vorgesehen Speicher gespeichert sind.

5. Verfahren nach Anspruch 4, **gekennzeichnet durch** Verwenden der gemessenen Eigenfrequenz und/oder der Ausschwingzeit eines Ultraschallsensors über einen vorbestimmten Zeitraum vor dem eigentlichen Überwachungsvorgang des Systems zum Prüfen der Störungsfreiheit des Sensors.

6. Verfahren nach Anspruch 4, **gekennzeichnet durch** periodisch wiederholtes Prüfen der Störungsfreiheit der Sensoren, bis ein störungsfreier Zustand erreicht ist.

7. Verfahren nach einem der Ansprüche 4 bis 6, **gekennzeichnet durch** Erzeugen einer akustischen oder grafischen Warnfunktion für den Fahrer bei Detektion einer Störung eines oder mehrerer Sensoren des Systems.

8. Verfahren nach einem der Ansprüche 4 bis 7, **gekennzeichnet durch** Verwenden von voreingestellten Grenzwerten der Ausschwingzeit und/oder der Eigenfrequenz der Sensoren zum Bestimmen einer Störung in der Erfassung mittels der Sensoren.

9. Verfahren nach einem der Ansprüche 4 bis 8, **gekennzeichnet durch** Vergleichen von Sensorwerten in einer Prüfphase mit gespeicherten Mustern einer Eigenfrequenz und einer Ausschwingzeit von verschiedenen Störungsarten zur Erfassung der Art der Störung.

## Claims

1. System for monitoring the vicinity of a motor vehicle with defect detection, having at least one sensor and one control unit, wherein the sensor is an acoustic sensor, in particular an ultrasonic sensor, and acoustic sensor values for the purpose of detecting objects can be evaluated by means of the control unit, wherein by means of the control unit at least one acoustic sensor value can be evaluated in terms of freedom of the sensor from defects, and wherein the at least one measured sensor value can be compared with stored values of a normal function of the sensor, **characterized in that** the natural frequency and the settling time of the acoustic sensor can be evaluated for the purpose of detecting interference by means of the control unit, and **in that** a memory is provided in the control unit and normal values of the natural frequency and of the settling time of the sensor are stored in the memory for the purpose of comparison with the values acquired for the purpose of defect detection.

2. System according to one of the preceding claims, **characterized in that** the at least one sensor is part of a parking aid system of a passenger car.

3. System according to one of the preceding claims, **characterized in that** the sensitivity of the at least one acoustic sensor can be set by means of the control unit.

4. Method for determining the freedom from defects of sensors of a system for monitoring the vicinity of a motor vehicle, wherein the presence of objects and/or the distance from objects in the vicinity is determined by means of a multiplicity of sensors, in particular of ultrasonic sensors, using measured sensor values, and are/is processed using a control unit in order to generate warning information for the driver, with testing of the freedom of the sensors from defects on the basis of acquired sensor values by comparison of at least one of the sensor values with stored values of a defect-free state, **characterized in that** the natural frequency and the settling time of the acoustic sensor are evaluated for the purpose of defect detection by means of the control unit, and **in that** the values which are acquired for the purpose of defect detection are compared with normal values of the natural frequency and of the settling time of the sensor, which values are stored in a memory which is provided in the control unit.

5. Method according to Claim 4, **characterized by** use of the measured natural frequency and/or of the settling time of an ultrasonic sensor over a predetermined time period before the actual process of monitoring the system in order to test the freedom of the sensor from defects.

6. Method according to Claim 4, **characterized by** periodically repeating testing of the freedom of the sensors from defects until a defect-free state is reached.

7. Method according to one of Claims 4 to 6, **characterized by** generation of an acoustic or graphic warning function for the driver when a defect is detected in one or more sensors of the system.

8. Method according to one of Claims 4 to 7, **characterized by** use of preset limiting values of the settling time and/or of the natural frequency of the sensors to determine a defect in the detection by means of the sensors.

9. Method according to one of Claims 4 to 8, **characterized by** comparison of sensor values in a test phase with stored patterns of a natural frequency and of a settling time of various types of defect in order to detect the type of defect.

## Revendications

1. Système de surveillance de la zone de proximité d'un véhicule automobile avec détection de défaut, comprenant au moins un capteur et un contrôleur, le capteur étant un capteur acoustique, notamment un capteur à ultrasons, et les valeurs de capteur acoustique pouvant être interprétées au moyen du contrôleur pour la détection d'objets, au moins une valeur de capteur acoustique pouvant être interprétée au moyen du contrôleur pour vérifier l'absence de défaut du capteur, et l'au moins une valeur de capteur mesurée pouvant être comparée avec les valeurs mémorisées d'une fonction normale du capteur, **caractérisé en ce que** la fréquence de résonance et le temps d'extinction de l'oscillation du capteur acoustique peuvent être interprétés pour la détection de défaut au moyen du contrôleur et **en ce qu'**une mémoire est prévue dans le contrôleur et les valeurs normales de la fréquence de résonance et du temps d'extinction de l'oscillation du capteur sont enregistrées dans la mémoire en vue de leur comparaison avec les valeurs acquises pour la détection de défauts.

2. Système selon l'une des revendications précédentes, **caractérisé en ce que** l'au moins un capteur fait partie d'un système d'aide au stationnement d'un véhicule de tourisme.

3. Système selon l'une des revendications précédentes, **caractérisé en ce que** la sensibilité de l'au moins un capteur acoustique est réglable au moyen du contrôleur.

4. Procédé de détermination de l'absence de défaut des capteurs d'un système de surveillance de la zone de proximité d'un véhicule automobile, la présence et/ou l'éloignement d'objets dans la zone de proximité étant déterminés au moyen d'une pluralité de capteurs, notamment de capteurs à ultrasons, par le biais des valeurs de capteur mesurées et traités par le biais d'un contrôleur pour générer une information d'alerte pour le conducteur, avec un contrôle de l'absence de défaut des capteurs en comparant au moins l'une des valeurs de capteur avec les valeurs mémorisées d'un état d'absence de défaut, **caractérisé en ce que** la fréquence de résonance et le temps d'extinction de l'oscillation du capteur acoustique sont interprétés pour la détection de défaut au moyen du contrôleur et **en ce que** les valeurs acquises pour la détection des défauts sont comparées avec les valeurs normales de la fréquence de résonance et du temps d'extinction de l'oscillation du capteur, lesquelles sont enregistrées dans une mémoire prévue dans le contrôleur.

5. Procédé selon la revendication 4, **caractérisé par** l'utilisation de la fréquence de résonance et/ou du temps d'extinction de l'oscillation mesuré d'un capteur à ultrasons pendant une période prédéfinie avant l'opération de surveillance proprement dite du système en vue de vérifier l'absence de défaut du capteur.

6. Procédé selon la revendication 4, **caractérisé par** le contrôle périodique répété de l'absence de défaut des capteurs, jusqu'à atteindre un état d'absence de défaut.

7. Procédé selon l'une des revendications 4 à 6, **caractérisé par** la génération d'une fonction d'alerte sonore ou graphique pour le conducteur lors de la détection d'un défaut d'un ou plusieurs capteurs du système.

8. Procédé selon l'une des revendications 4 à 7, **caractérisé par** l'utilisation de valeurs limites préréglées du temps d'extinction de l'oscillation et/ou de la fréquence de résonance des capteurs pour déterminer un défaut dans la détection au moyen des capteurs.

9. Procédé selon l'une des revendications 4 à 8, **caractérisé par** la comparaison valeurs des capteurs dans une phase de contrôle avec les modèles mémorisés d'une fréquence de résonance et d'un temps d'extinction de l'oscillation de différents types de défaut en vue de détecter la nature du défaut.
